# EUROPÄISCHE PATENTANMELDUNG

(11) **EP 2 163 979 A2**
(43) Veröffentlichungstag der Anmeldung: **17.03.2010**
(21) Anmeldenummer: 09167922.5
(22) Anmeldetag: 14.08.2009
(51) Int. Cl.: G06F 3/06

(54) **Anschlussvorrichtung zum Anschluss einer Mehrzahl von Peripheriegeräten und Betriebsverfahren**

(30) Priorität: 10.09.2008 DE 102008046577
(71) Anmelder: Sinitec Vertriebsgesellschaft mbH, 80807 München (DE)
(72) Erfinder: Depta, Robert, 86179 Augsburg (DE); Gruber, Reinhold, 86438 Kissing (DE)
(74) Vertreter: Epping - Hermann - Fischer

(57) **Zusammenfassung**

Die Erfindung betrifft eine Anschlussvorrichtung (4) zum Anschluss einer Mehrzahl von Peripheriegeräten (7) an wenigstens einen Host-Adapter (3), wobei jedes der Mehrzahl von Peripheriegeräten (7) sowie der Host-Adapter (3) ein erstes und/oder zweites Datenübertragungsprotokoll beherrscht. Insbesondere erlaubt die Anschlussvorrichtung (4) eine flexible Zuordnung von Peripheriegeräten (7) gemäß dem ersten oder zweiten Datenübertragungsprotokoll zu einer ersten oder zweiten Gruppe, die durch einen oder mehrere geeignete Host-Adapter (3) angesteuert werden.

Die Erfindung betrifft außerdem ein Betriebsverfahren (50) für eine solchen Anschlussvorrichtung (4).

## Beschreibung

Die Erfindung betrifft eine Anschlussvorrichtung zum Anschluss einer Mehrzahl von Peripheriegeräten an wenigstens einen Host-Adapter, wobei jedes der Mehrzahl von Peripheriegeräten sowie der Host-Adapter ein erstes und/oder ein zweites Datenübertragungsprotokoll beherrscht.

Darüber hinaus betrifft die Erfindung ein Betriebsverfahren für eine Anschlussvorrichtung zum Anschließen einer Mehrzahl von Peripheriegeräten an wenigstens einen Host-Adapter.

Im Bereich der elektronischen Datenverarbeitung findet eine immer größere Konzentration von Diensten in Rechenzentren statt, sodass immer umfangreichere und leistungsfähigerer Anordnungen zu deren Bearbeitung benötigt werden. Gleichzeitig findet eine Leistungssteigerung der zur Verbindung der Komponenten solcher Anordnungen verwendeten Datenübertragungskanäle statt, sodass immer mehr Peripheriegeräte an einem gemeinsamen Host betrieben werden können. Insbesondere im Serverbereich ist es bekannt, eine Vielzahl von Peripheriegeräten, insbesondere Speichergeräten wie Festplattenlaufwerken oder Bandlaufwerken, an einem gemeinsamen Host-Adapter eines Host-Computers zu betreiben. Um die Ausnutzung der Peripheriegeräte zu verbessern, ist es auch bekannt, dieselben Peripheriegeräte über Anschlussvorrichtungen an eine Mehrzahl von Host-Adaptern unterschiedlicher Host-Computer anzuschließen. Dabei haben sich im Bereich der Datenspeicherung zwei unterschiedliche Anschlussarten mit zugehörigen Datenübertragungsprotokollen durchgesetzt.

Das verhältnismäßig kostengünstige Serial ATA (SATA) System dient insbesondere zur Kopplung von Festplatten mit einem Computersystem. Ursprünglich für den internen Anschluss von Festplattenlaufwerken in einem Desktop-Computer gedacht, sehen SATA Host-Adapter in der Regel nur wenige Anschlussmöglichkeiten für Festplatten vor. Um dennoch weitere Festplatten, wie sie beispielsweise in so genannten Redundant Array of Independent Disks (RAID) vorkommen, mit dem Host-Computer zu koppeln, wurden so genannte SAS-Port-Multiplier und SAS-Port-Selectoren entwickelt. Bei einem Port-Multiplier teilen sich die Laufwerke die verfügbare Übertragungsbandbreite. Mit einem Port-Selector werden dagegen unterschiedliche Übertragungsstrecken zwischen einzelnen Laufwerken und Host-Adaptern geschaltet, sodass mehrere Host-Systeme gleichzeitig auf ein und dasselbe Laufwerk zugreifen können. Zur Vermeidung von Fehlern und insbesondere der Sicherstellung der Datenkonsistenz ist jedoch eine Koordination der beteiligten Komponenten über spezielle Zugriffsmechanismen erforderlich.

Alternativ ist insbesondere aus dem Hochleistungsserverbereich das so genannte Serial Attached SCSI (SAS) Bussystem und Protokoll zum Anschluss einer Vielzahl von Peripheriegeräten an einen SAS-Host-Adapter bekannt. Wie auch beim SATA-Standard wird für jedes einzelne Peripheriegerät ein entsprechender Anschlussport benötigt. Zur Erweiterung der am Host-Adapter vorhanden Anschlüsse werden im Standard daher so genannte SAS-Expander definiert, die den Anschluss zusätzlicher SAS-Geräte an einem einzelnen Anschluss des Host-Adapter ermöglichen, wobei der SAS-Expander die Vermittlung übernimmt. SAS-Geräte und Host-Adapter sind verhältnismäßig teuer, ermöglichen jedoch eine Vielzahl von Diensten und können zugleich auch auf SATA-Speicherlaufwerke zugreifen. Umgekehrt können SATA-Host-Adapter jedoch nicht auf SAS-Geräte zugreifen.

In heterogenen Systemumgebungen treffen oftmals eine Vielzahl unterschiedlicher Host-Adapter und Peripheriegeräte aufeinander, die teilweise gemäß dem SAS- und teilweise gemäß dem SATA-Standard ausgeführt sind. Da SAS und SATA dieselben Steckernormen zum Anschluss der Peripheriegeräte verwenden, kann es zu Fehlverkabelungen und damit Fehlfunktionen der einzelnen Geräte dienen. Darüber hinaus stellt sich für Systemhersteller das Problem, eine große Anzahl unterschiedlicher Kopplungsgeräte zum Anschluss von SAS- bzw. SATA-Laufwerken an SAS- bzw. SATA-Host-Adapter bereitzuhalten. Beispielsweise ist es üblich, unterschiedliche Backplanes für Rack-Server and RAID-System vorzusehen, die entweder nach dem SAS- oder SATA-Standard ausgeführt sind.

Aufgabe der vorliegenden Erfindung ist es, eine möglichst u-niversale Anschlussvorrichtung zum Anschluss einer Mehrzahl von Peripheriegeräten an wenigsten einen Host-Adapter zu beschreiben, mit dem eine möglichst große Anzahl unterschiedlicher Systemkonfigurationen erfolgreich aufgebaut werden kann. Bevorzugt soll zur Einrichtung der Anschlussvorrichtung keine manuelle Konfiguration erforderlich sein.

Gemäß einem ersten Aspekt der Erfindung weist eine Anschlussvorrichtung der eingangs genannten Art wenigstens einen ersten Host-Anschluss zum Anschluss an den wenigstens einen Host-Adapter, eine Mehrzahl von Geräteanschlüssen zum Anschluss der Mehrzahl von Peripheriegeräten, wenigstens eine Vermittlungseinrichtung zum wahlfreien Verbinden der Mehrzahl von Geräteanschlüssen mit dem ersten Host-Anschluss, wenigstens eine Erkennungseinrichtung zum Erkennen eines Bereitstellens eines vorbestimmten Konfigurationssignals gemäß einem ersten Datenübertragungsprotokoll an dem ersten HostAnschluss und wenigstens eine Steuereinrichtung zum Auswählen einer Betriebsart der Anschlussvorrichtung auf. Dabei ist die Steuereinrichtung dazu eingerichtet, während einer Initialisierungsphase die Anschlussvorrichtung bei Erkennung des vorbestimmten Konfigurationssignals an dem ersten Host-Anschluss durch die Erkennungseinrichtung in eine erste Betriebsart gemäß dem ersten Datenübertragungsprotokoll und bei Nichterkennung des vorbestimmten Konfigurationssignals in eine zweite Betriebsart gemäß dem zweiten Datenübertragungsprotokoll zu schalten.

Durch Überwachung des ersten Host-Anschlusses während einer Initialisierungsphase auf Bereitstellen eines vorbestimmten Konfigurationssignals kann erkannt werden, ob die Anschlussvorrichtung an einem Host-Adapter gemäß einem ersten Datenübertragungsprotokoll oder einem zweiten Datenübertragungsprotokoll angeschlossen ist. Dementsprechend kann die Anschlussvorrichtung in eine dementsprechende erste oder zweite Betriebsart geschaltet werden, um eine erfolgreiche Kommunikation zwischen dem Host-Adapter, der Anschlussvorrichtung und gegebenenfalls daran angeschlossenen Peripheriegeräten zu ermöglichen.

Gemäß einer weiteren vorteilhaften Ausgestaltung ist die wenigstens eine Erkennungseinrichtung zum Erkennen eines Bereitstellens eines vorbestimmten Konfigurationssignals gemäß dem ersten Datenübertragungsprotokoll an der Mehrzahl von Geräteanschlüssen eingerichtet und die Steuervorrichtung ist dazu eingerichtet, eine erste Gruppe von Geräteanschlüssen der Mehrzahl der Geräteanschlüsse dem ersten Host-Anschluss zuzuordnen, wobei die Zugehörigkeit eines Geräteanschlusses zu der ersten Gruppe in Abhängigkeit einer Erkennung des vorbestimmten Konfigurationssignals durch die Erkennungseinrichtung bestimmt wird. Durch Erkennung und Auswertung eines vorbestimmten Konfigurationssignals an den Geräteanschlüssen kann eine automatische Zuordnung von an die Anschlussvorrichtung angeschlossenen Geräten zu der ersten Gruppe vorgenommen werden. Dabei kann die Erkennung durch dieselbe Erkennungseinrichtung oder eine zusätzliche Erkennungseinrichtung vorgenommen werden.

Gemäß einer weiteren vorteilhaften Ausgestaltung ist die Steuereinrichtung dazu eingerichtet, wenigstens die Geräteanschlüsse der ersten Gruppe zuzuordnen, an denen das vorbestimmte Konfigurationssignal erkannt wurde, wenn in der Initialisierungsphase das vorbestimmte Konfigurationssignal an dem ersten Host-Anschluss ebenfalls erkannt wurde. Durch Zuordnen von Geräten, die das vorbestimmte Konfigurationssignal gemäß dem ersten Datenübertragungsprotokoll zur Verfügung stellen, zu der ersten Gruppe und damit dem ersten Host-Anschluss, an dem ein Host-Adapter angeschlossen ist, der ebenfalls gemäß dem ersten Datenübertragungsprotokoll arbeitet, können sämtliche Geräte gemäß dem ersten Datenverarbeitungsprotokoll erfolgreich angesprochen werden.

Gemäß einer weiteren vorteilhaften Ausgestaltung ist die Steuereinrichtung dazu eingerichtet, nur die Geräteanschlüsse der ersten Gruppe zuzuordnen, an denen das vorbestimmte Konfigurationssignal nicht erkannt wurde, wenn in der Initialisierungsphase das vorbestimmte Konfigurationssignal an dem ersten Host-Anschluss ebenfalls nicht erkannt wurde. Durch Zuordnung und somit Verknüpfung von Geräten, die das erste Konfigurationssignal nicht bereitstellen, mit einem Host-Adapter, der das erste Konfigurationssignal ebenfalls nicht bereitstellt, werden Peripheriegeräte, die nach dem zweiten Datenübertragungsprotokoll arbeiten, mit einem Host-Adapter, der ebenfalls gemäß dem zweiten Datenübertragungsprotokoll arbeitet, verbunden.

Gemäß einer vorteilhaften Ausgestaltung ist die Anschlussvorrichtung durch wenigstens einen zweiten Host-Anschluss gekennzeichnet, wobei die Steuereinrichtung dazu eingerichtet ist, die Anschlussvorrichtung bei Erkennen des vorbestimmten Konfigurationssignals an dem ersten Host-Anschluss und bei Nichterkennen des vorbestimmten Konfigurationssignals an dem zweiten Host-Anschluss in eine dritte Betriebsart zu schalten, in der wenigstens ein Geräteanschluss gemäß dem ersten Übertragungsprotokoll und wenigstens ein anderer Geräteanschluss gemäß dem zweiten Datenübertragungsprotokoll angesteuert wird. Durch Verwendung einer dritten Betriebsart, in der unterschiedliche Host-Adapter und/oder Peripheriegeräte, die an die Anschlussvorrichtung angeschlossen sind, entweder gemäß dem ersten Übertragungsprotokoll oder gemäß dem zweiten Datenübertragungsprotokoll angesteuert werden, kann eine gemischte Betriebsart zum Anschluss unterschiedlicher Peripheriegeräte an unterschiedliche Host-Adapter verwirklicht werden.

Gemäß einer vorteilhaften Ausgestaltung ist die Steuereinrichtung dazu eingerichtet, eine zweite Gruppe von Geräteanschlüssen der Mehrzahl der Geräteanschlüsse dem zweiten Host-Anschluss zuzuordnen. Durch Zuordnung anderer Peripheriegeräte zu einer zweiten Gruppe von Geräteanschlüssen an den zweiten Host-Anschluss können unterschiedliche Gruppen von Peripheriegeräten dem ersten bzw. zweiten Host-Anschluss zugeordnet werden.

Gemäß einer weiteren vorteilhaften Ausgestaltung ist die Steuervorrichtung dazu eingerichtet, eine vorbestimmte Geräteeigenschaft wenigstens der Geräte abzufragen, die an Geräteanschlüsse angeschlossen sind, an denen das vorbestimmte Konfigurationssignal nicht erkannt wurde, und die Zuordnung dieser Geräte in Abhängigkeit der abgefragten Geräteeigenschaft zu bestimmen. Durch Überprüfung einer Geräteeigenschaft, insbesondere der Geräte, die gemäß dem zweiten Datenübertragungsprotokoll betrieben werden sollen, kann deren Anschluss an einen ersten und/oder zweiten Host-Adapter von deren jeweiligen Datenverarbeitungsfähigkeiten abhängig gemacht werden.

Gemäß einer vorteilhaften Ausgestaltung umfasst die abgefragte Geräteeigenschaft eine Mehrfachzuordnungsfähigkeit und die Steuervorrichtung ist dazu eingerichtet, Geräte mit einer Mehrfachzuordnungsfähigkeit sowohl der ersten als auch der zweiten Gruppe zuzuordnen. Geräte, die dazu eingerichtet sind, an unterschiedlichen Host-Adaptern gleichzeitig betrieben zu werden, können somit sowohl dem ersten als auch dem zweiten Host-Adapter zugeordnet werden.

Gemäß einer weiteren vorteilhaften Ausgestaltung ist die Steuereinrichtung dazu eingerichtet, die Geräteanschlüsse auf Grundlage einer Zuordnungstabelle einer Konfigurationseinrichtung der ersten und/oder zweiten Gruppe zuzuordnen. Durch Verwendung einer Zuordnungstabelle können Abweichungen von dem automatischen Zuordnungsschema berücksichtigt werden, beispielsweise um vorbestimmte Peripheriegeräte einem vorbestimmten Host-Adapter zuzuordnen.

Gemäß einer weiteren vorteilhaften Ausgestaltung entspricht das erste Datenübertragungsprotokoll dem Serial Attached SCSI-Protokoll, die Anschlussvorrichtung ist wenigstens als SAS-Expander betreibbar und das erste Konfigurationssignal entspricht dem COMSAS-Signal.

Gemäß einer weiteren vorteilhaften Ausgestaltung entspricht das zweite Datenübertragungsprotokoll dem Serial ATA-Protokoll und die Anschlussvorrichtung ist wenigstens als SATA-Port-Multiplier und/oder SATA-Port-Selector betreibbar ist.

Gemäß einem weiteren Aspekt der Erfindung wird ein Betriebsverfahren für eine Anschlussvorrichtung zum Anschließen einer Mehrzahl von Peripheriegeräten an wenigstens einen Host-Adapter offenbart. Das Betriebsverfahren umfasst die Schritte:
- Überwachen eines ersten Host-Anschlusses auf ein vorbestimmten Konfigurationssignal des wenigstens einen Host-Adapters,
- Auswählen einer ersten Betriebsart der Anschlussvorrichtung, wenn das vorbestimmte Konfigurationssignal während einer Initialisierungsphase erkannt wurde, und einer zweiten Betriebsart, wenn das vorbestimmte Konfigurationssignal während der Initialisierungsphase nicht erkannt wurde,
- Überwachen einer Mehrzahl von Geräteanschlüssen auf das vorbestimmte Konfigurationssignal der Mehrzahl von Peripheriegeräten und
- Verbinden einer ersten Gruppe von Peripheriegeräten der Mehrzahl der Peripheriegeräte mit dem wenigstens einen Host-Adapter in Abhängigkeit der Überwachung des ersten Host-Anschlusses und/oder der Mehrzahl von Geräteanschlüssen auf das vorbestimmte Konfigurationssignal.

Durch Überwachung sowohl eines ersten Host-Anschlusses als auch einer Mehrzahl von Geräteanschlüssen auf ein vorbestimmtes Konfigurationssignal können die von einem Host-Adapter und einer Mehrzahl von Peripheriegeräten verwendeten Datenübertragungsprotokolle ermittelt und kompatible Geräte einander zugeordnet werden.

Gemäß einer weiteren vorteilhaften Ausgestaltung ist das Betriebsverfahren durch ein Überwachen eines zweiten Host-Anschlusses auf das vorbestimmte Konfigurationssignal wenigstens eines zweiten Host-Adapters und ein Auswählen einer dritten Betriebsart der Anschlussvorrichtung gekennzeichnet, wenn das vorbestimmte Konfigurationssignal während einer Initialisierungsphase an dem ersten Host-Anschluss erkannt wurde und das vorbestimmte Konfigurationssignal während der Initialisierungsphase an dem zweiten Host-Anschluss nicht erkannt wurde. Durch Erkennung einer gemischten Konfiguration unter Verwendung zweier unterschiedlicher Host-Adapter können unterschiedliche Peripheriegeräte dem jeweils passenden Host-Adapter zugeordnet werden.

Gemäß einer weiteren vorteilhaften Ausgestaltung verwenden der wenigstens eine Host-Anschluss und/oder die Mehrzahl der Geräteanschlüsse während einer Datenübertragungsphase eine differenzielle Signalisierung und in einer Initialisierungsphase eine nicht differenzielle Signalisierung. Durch Verwendung einer differenziellen bzw. nicht differenziellen Signalisierung kann eine Datenübertragungsphase von einer Initialisierungsphase unterschieden werden.

Weitere vorteilhafte Ausgestaltungen sind in den Unteransprüchen sowie in der nachfolgenden Beschreibung von Ausführungsbeispielen näher erläutert. Die Ausführungsbeispiele werden unter Bezugnahme auf Figuren näher beschrieben.

### In den Figuren zeigen:

- Figur 1: eine Anordnung umfassend eine Mehrzahl von HostSystemen, die über eine Anschlussvorrichtung mit einer Mehrzahl von Peripheriegeräten verbunden ist,
- Figur 2: eine schematische Darstellung einer Anschlussvorrichtung gemäß einer Ausgestaltung der Erfindung,
- Figur 3A: und 3B unterschiedliche Konfigurationen einer Anschlussvorrichtung zum Anschluss von Peripheriegeräten an einen einzelnen Host-Adapter,
- Figur 4A: und 4B unterschiedliche Konfigurationen einer Anschlussvorrichtung zum Anschluss von Peripheriegeräten an eine Mehrzahl von Host-Adaptern und
- Figur 5: ein Ablaufdiagramm eines Betriebsverfahrens für eine Anschlussvorrichtung gemäß einer Ausgestaltung der Erfindung.

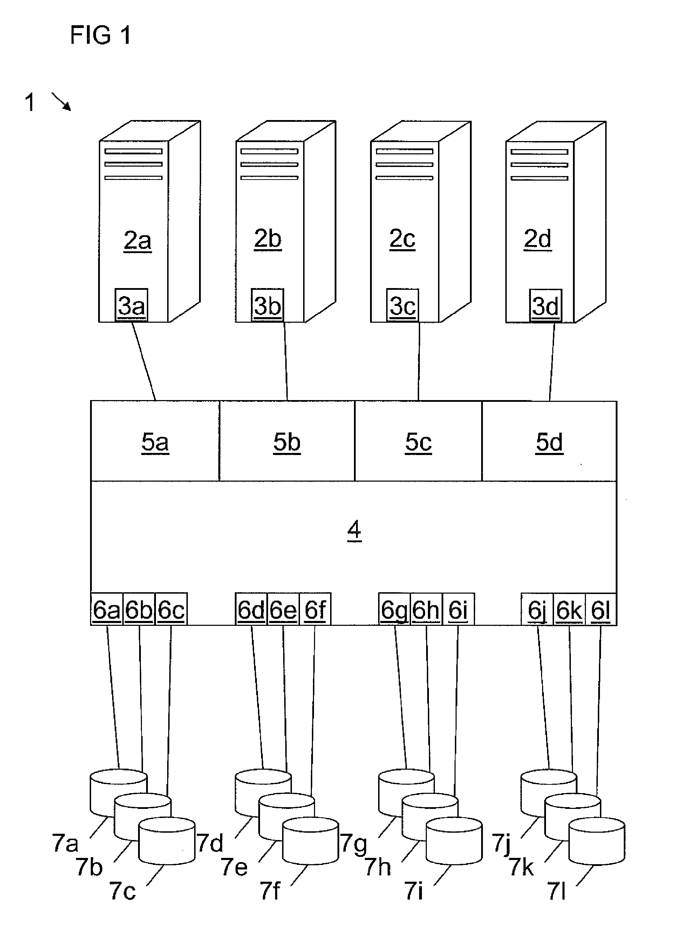

Figur 1 zeigt eine Computeranordnung 1 mit vier Host-Computern 2a bis 2d. Jeder der Host-Computer 2a bis 2d enthält jeweils einen Host-Adapter 3a bis 3d. Über die Host-Adapter 3a bis 3d sind die Host-Computer 2a bis 2d mit einer Anschlussvorrichtung 4 gekoppelt. Bei der Anschlussvorrichtung 4 handelt es sich beispielsweise um eine so genanntes RAID-System mit einer Vielzahl von Einschubplätzen für Speicherlaufwerke. Alternativ kann es sich jedoch auch um einen so genannten Switch zum Verschalten von anderen Arten von Peripheriegeräten handeln. Insbesondere handelt es sich bei der Anschlussvorrichtung 4 des Ausführungsbeispiels um eine so genannte Backplane in einem Rack-Computersystem.

Die Anschlussvorrichtung 4 weist im Ausführungsbeispiel vier Host-Anschlüsse 5a bis 5d auf. Jeder der Host-Computer 2a bis 2d ist mit jeweils einem der Host-Anschlüsse 5a bis 5d verbunden. Des Weiteren weist die Anschlussvorrichtung 4 im Ausführungsbeispiel zwölf Geräteanschlüsse 6a bis 61 auf. An jedem der Geräteanschlüsse 6a bis 61 ist jeweils ein Peripheriegerät angeschlossen. Im in der Figur 1 dargestellten Ausführungsbeispiel handelt es sich bei den Peripheriegeräten um Festplattenlaufwerke 7a bis 71.

Im dargestellten Ausführungsbeispiel handelt es sich um ein heterogenes Computersystem. Beispielsweise weisen die Host-Computer 2a und 2b jeweils einen Host-Adapter 3a bzw. 3b gemäß dem SAS-Standard auf. Dahingegen sind die Host-Computer 2c und 2d mit einem Host-Adapter 3c bzw. 3d gemäß dem SATA-Standard ausgerüstet. Gleichfalls handelt es sich bei den Festplattenlaufwerke 7a bis 7i beispielsweise um Festplattenlaufwerke mit einer SAS-Schnittstelle, während die Festplattenlaufwerke 7j bis 71 mit einer Schnittstelle gemäß dem SATA-Standard ausgerüstet sind.

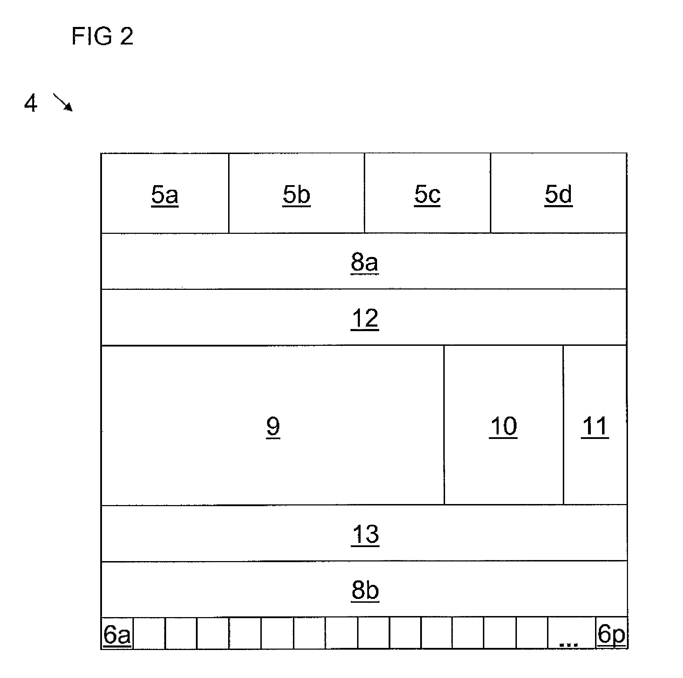

Um ein korrektes Funktionieren bzw. eine korrekte Zuordnung sämtlicher Festplattenlaufwerke 7 zu den Host-Adaptern 3 der Host-Computer 2 zu ermöglichen, weist die Anschlussvorrichtung 4 eine Erkennungsvorrichtung auf, die nachfolgend unter Bezugnahme auf die Figur 2 näher beschrieben wird.

Figur 2 zeigt eine Anschlussvorrichtung 4 mit vier Host-Anschlüssen 5a bis 5d und 16 Geräteanschlüssen 6a bis 6p.

Darüber hinaus umfasst die Anschlussvorrichtung 4 eine erste Erkennungseinrichtung 8a zum Erkennen eines vorbestimmten Konfigurationssignals, insbesondere eines so genannten COMSAS-Signals gemäß dem SAS-Standard, an den Host-Anschlüssen 5a bis 5d und eine zweite Erkennungseinrichtung 8b zur Erkennung des vorbestimmten Konfigurationssignals an den Geräteanschlüssen 6a bis 6p. Über eine Vermittlungseinrichtung 9 können die Host-Anschlüsse 5a bis 5d selektiv mit den Geräteanschlüssen 6a bis 6p verbunden werden. Beispielsweise handelt es sich bei der Vermittlungseinrichtung 9 um eine Bridge oder einen Switch, der einen oder mehrere Nachrichtenkanäle von einem oder mehreren der Host-Anschlüsse 5a bis 5d zu einem oder mehreren der Geräteanschlüsse 6a bis 6p schalten kann.

Um die Zuordnung der Host-Anschlüsse 5a bis 5d zu den Geräteanschlüssen 6a bis 6p festzulegen, weist die Anschlussvorrichtung 4 eine Steuereinrichtung 10 auf, die in Abhängigkeit von Steuersignalen der Erkennungseinrichtungen 8a und 8b und gegebenenfalls weiteren in der Anschlussvorrichtung 4 gespeicherten Konfigurationsdaten jeden der Geräteanschlüsse 6a bis 6p einem oder mehreren der Host-Anschlüsse 5a bis 5d zuordnet.

Zusätzlich ist eine optionale Konfigurationseinrichtung 11 vorgesehen, die einen Konfigurationsanschluss umfasst, der zum Vornehmen manueller Einstellungen der Steuereinrichtung 10 dient. Hierbei kann es sich beispielsweise um einen zusätzlichen Anschluss für einen Steuerrechner oder um einen logischen Adressbereich der Anschlussvorrichtung handeln, der über einen der Host-Anschlüsse 5a bis 5d angesprochen werden kann.

Schließlich umfasst die Anschlussvorrichtung 4 eine Hostanschluss-Verbindungsmatrix 12 und eine Geräteanschluss-Verbindungsmatrix 13. Durch die Hostanschluss-Verbindungsmatrix 12 wird festgelegt, welche der Host-Anschlüsse 5a bis 5d einem Host-Adapter 3 gemäß einem ersten oder zweiten Datenübertragungsprotokoll zugeordnet sind. Durch die Geräteanschluss-Verbindungsmatrix 13 wird festgelegt, an welche der Geräteanschlüsse 6a bis 6p Peripheriegeräte gemäß dem ersten oder dem zweiten Datenübertragungsstandard angeschlossen sind und gegebenenfalls ob diese die Fähigkeit besitzen, gleichzeitig mit mehreren Host-Computern 2 verbunden zu werden. Die Steuereinrichtung 10 bestimmt unter Berücksichtigung der Informationen der Hostanschluss-Verbindungsmatrix 12 und der Geräteanschluss-Verbindungsmatrix 13, welche der Host-Anschlüsse 5a bis 5d mit welchen der Geräteanschlüsse 6a bis 6p durch die Vermittlungseinrichtung 9 miteinander verbunden werden.

Die Vermittlungseinrichtung 9, die Steuereinrichtung 10, die Konfigurationseinrichtung 11, die Erkennungseinrichtungen 8a und 8b, die Hostanschluss-Verbindungsmatrix 12 und/oder die Geräteanschluss-Verbindungsmatrix 13 können als gesonderte Hardware-Bausteine oder als integrierte Komponente ausgebildet werden. Insbesondere können zur Umsetzung der erforderlichen Protokolle programmierbare Logikbausteine wie FPGA, EPDL oder ASIC Verwendung finden. Selbstverständlich können auch bekannte Steuerbausteine, die nach dem ersten und/oder zweiten Datenübertragungsprotokoll arbeiten, miteinander kombiniert werden, um die gewünschte Funktionalität zu erreichen.

Im Ausführungsbeispiel handelt es sich bei dem ersten Datenübertragungsprotokoll um das SAS-Protokoll. Bei dem zweiten Datenübertragungsprotokoll handelt es sich um das SATA-Protokoll. Gemäß dem SAS-Protokoll findet bei der Initialisierung einer Verbindung zwischen einem Host-Adapter 3 oder einem Peripheriegerät mit einer Anschlussvorrichtung 4 eine Link-Initialisierung statt, bei der eine so genannte COMSAS-Signalisierung erfolgt. Bei der COMSAS-Signalisierung handelt es sich um ein so genanntes Out-of-band (OOB) Signal, dessen Signalpegel außerhalb der üblichen Spezifikation gemäß dem SAS-Standard liegen. Insbesondere wird für die COMSAS-Signalisierung eine nicht differenzielle Signalisierung verwendet, während für die Datenübertragung eine differenzielle Signalisierung an den Host-Anschlüssen 5 bzw. den Geräteanschlüssen 6 verwendet wird.

Wird ein Host-Computer 2 mit einem Host-Adapter 3 gemäß dem SAS-Standard an einen Host-Anschluss 5 der Anschlussvorrichtung 4 angeschlossen, erkennt die Erkennungseinrichtung 8a das COMSAS-Signal. Der SATA-Standard sieht hingegen keine Link-Initialisierung mit einer COMSAS-Signalisierung vor. Erkennt die Erkennungseinrichtung 8a den Anschluss eines Host-Adapters 3 an einen Host-Anschluss 5, ohne dass innerhalb eines vorbestimmten Zeitraums ein COMSAS-Signal erkannt wird, wird daher in der Hostanschluss-Verbindungsmatrix 2 festgehalten, dass an den zugehörigen Host-Anschluss 5 ein SATA-Host-Adapter 3 angeschlossen ist.

Die Steuereinrichtung 10 schaltet die Anschlussvorrichtung 4 und insbesondere die Vermittlungseinrichtung 9 in eine erste Betriebsart, die dem Betrieb eines SAS-Expanders entspricht, wen an allen Host-Anschlüssen 5 ein COMSAS-Signal erkannt wurde. Wird durch die Erkennungseinrichtung 8a hingegen an allen Host-Anschlüssen 5a bis 5d die Abwesenheit eines COMSAS-Signals erkannt, schaltet die Steuereinrichtung 10 die Anschlussvorrichtung 4 in eine Betriebsart als SAS-Port-Multiplier oder SAS-Port-Selector. Dabei wird gegebenenfalls durch die Konfigurationseinrichtung 11 bestimmt, ob die Anschlussvorrichtung 4 als Port-Multiplier oder Port-Selector betrieben wird.

Die Anforderungen zum Betrieb einer Vermittlungsvorrichtung als SAS-Expander oder SAS-Port-Multiplier bzw. Selector werden durch die jeweiligen Standards festgelegt. Insbesondere beschreibt das Dokument "Information technology - Serial Attached SCSI - 2 (SAS-2)", Revision 14c vom 30. Juni 2008 des Projekts T10 des Technical Committee of Accredited Standards Committee INCITS (International Committee for Information Technology Standards) den SAS-Standard. Das Dokument "SERIAL ATA", Revision 2.6 vom 15. Februar 2007 der Serial ATA International Organization (SATA-IO) beschreibt dagegen den SATA-Standard. Auf die Definitionen und Offenbarung beider Standards wird durch diese Anmeldung ausdrücklich Bezug genommen.

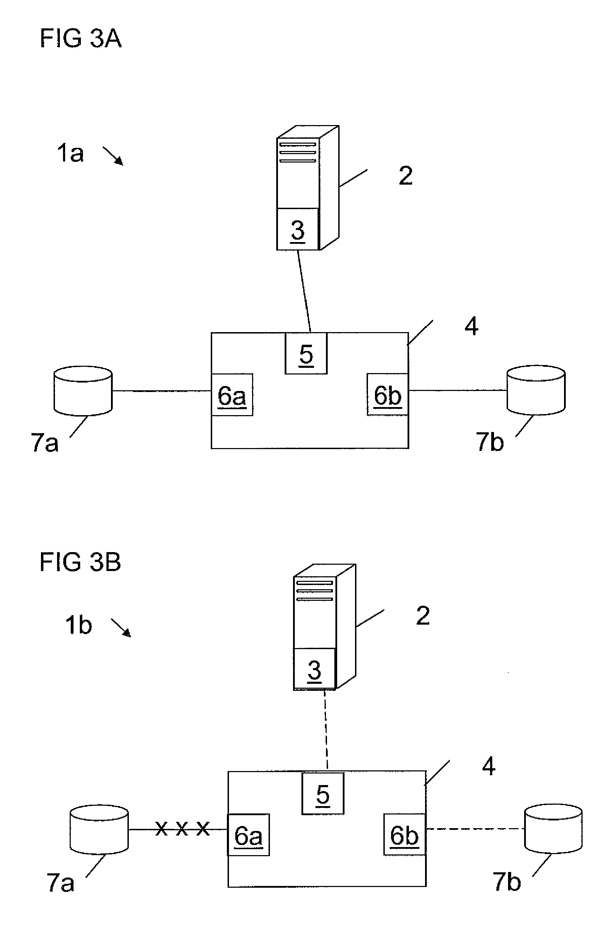

In der Figur 3A ist eine erste Konfiguration einer Computeranordnung 1a mit einem einzelnen Host-Computer 2 beschrieben. Der Host-Computer 2 enthält einen Host-Adapter 3 gemäß dem SAS-Standard. Dieser ist mit einem einzelnen Host-Port 5 und einer Anschlussvorrichtung 4 verbunden. Mit der Anschlussvorrichtung 4 sind zwei Festplattenlaufwerke 7a und 7b über zwei Geräteanschlüsse 6a und 6b verbunden. In diesem Fall schaltet die Steuereinrichtung 10 die Anschlussvorrichtung 4 in die erste Betriebsart, in der die Anschlussvorrichtung 4 als SAS-Expander beschrieben wird. Hierin ist es dem Host-Computer 2 möglich, sowohl auf die erste Festplatte 7a, bei der es sich beispielsweise um eine Festplatte nach dem SAS-Standard handelt, als auch auf die zweite Festplatte 7b, bei der es sich beispielsweise um eine Festplatte gemäß dem SATA-Standard handelt, zuzugreifen. Der Host-Adapter 3 erkennt selbständig, welches Protokoll er zur Signalisierung mit der ersten Festplatte 7a bzw. der zweiten Festplatte 7b verwenden muss. Dabei verwendet der Host-Adapter 3 beim Zugriff auf die SATA-Festplatte 7b beispielsweise das so genannte SATA Tunneling Protocol (STP), um die Einbindung des SATA-Gerätes in die logische SAS-Domain zu gewährleisten.

Figur 3B zeigt eine zweite Computeranordnung 1b, umfassend einen Host-Computer 2 mit einem Host-Adapter 3 gemäß dem SATA-Standard. Der Host-Adapter 3 ist über einen Host-Anschluss 5 mit einer Anschlussvorrichtung 4 verbunden. Die Anschlussvorrichtung 4 ist wie in der Figur 3A über einen ersten Geräteanschluss 6a bzw. einen zweiten Geräteanschluss 6b mit einem ersten Festplattenlaufwerk 7a gemäß dem SAS-Standard und einem zweiten Festplattenlaufwerk 7b gemäß dem SATA-Standard verbunden. Da der Host-Adapter 3 nicht dazu geeignet ist, auf die erste Festplatte 7a gemäß dem SAS-Standard zuzugreifen, wird die logische Verbindung zwischen dem ersten Festplattenlaufwerk 7a und der Anschlussvorrichtung 4 unterbrochen. Dabei wird das erste Festplattenlaufwerk 7a in einem dem SAS-Standard entsprechenden, inaktiven Zustand, beispielsweise einem Bereitschafts- oder Energiesparzustand gehalten. Somit wird lediglich das zweite Festplattenlaufwerk 7b dem Host-Computer 2 zugeordnet und kann von diesem mittels des SATA-Protokolls angesprochen werden. Dabei arbeitet die Anschlussvorrichtung 4 gemäß einer Voreinstellung entweder als Port Multiplexer oder als Port-Selector.

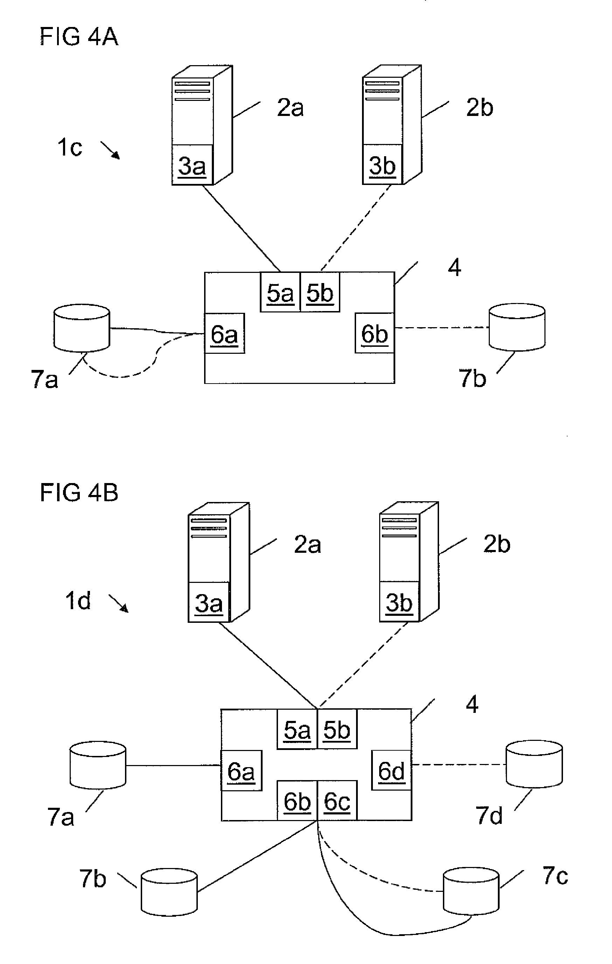

Die Flexibilität der Anschlussvorrichtung 4 zeigt sich insbesondere beim Anschluss mehrerer Hostcomputer 2 an dieselbe Anschlussvorrichtung zum gemeinsamen Zugriff auf eine Mehrzahl von Peripheriegeräten. Derartige Konfigurationen sind in den Figuren 4A und 4B beispielhaft dargestellt.

Figur 4A zeigt eine dritte Computeranordnung 1c, umfassend zwei Host-Computer 2a und 2b mit jeweils einem SATA-Host-Adapter 3a bzw. 3b. Die Host-Adapter 3a bzw. 3b sind mit Host-Anschlüssen 5a bzw. 5b einer Anschlussvorrichtung 4 verbunden. An die Anschlussvorrichtung 4 sind eine erste Festplatte 7a und eine zweite Festplatte 7b, beide gemäß dem SATA-Standard, über Geräteanschlüsse 6a bzw. 6b angeschlossen. Die erste Festplatte 7a unterstützt einen so genannten Antikollisionsmechanismus. Die zweite Festplatte 7b hingegen unterstützt keinen Antikollisionsmechanismus. Diese Geräteeigenschaft der Festplatten 7a und 7b wird durch die Steuereinrichtung 10 bei der Initialisierung der Geräteanschlüsse 6 abgefragt. Die Festplatte 7a mit Antikollisionsmechanismus steht gleichzeitig für alle Host-Computer 2 zur Verfügung. Die Festplatte 7b ohne Antikollisionsmechanismus kann ebenfalls durch jeden der Host-Adapter 3 der Host-Computer 2 angeschlossen werden. Um Kollisionen bei den Zugriffen unterschiedlicher Host-Computer 2 zu verhindern, verbindet die Vermittlungseinrichtung 9 den Geräteanschluss 6b jedoch nur abwechselnd mit dem Host-Anschluss 5a oder 5b, sodass Zugriffe der Host-Computer 2a bzw. 2b auf die zweite Festplatte 7b nur nacheinander durchgeführt werden können. Somit übernimmt die Anschlussvorrichtung 4 das Antikollisionsmanagement für das Festplattenlaufwerk 7b.

Wird durch die Erkennungseinrichtung 8a an wenigstens einem belegten Host-Anschluss 5 ein COMSAS-Signal erkannt und an wenigstens einem weiteren belegten Host-Anschluss 5 kein COMSAS-Signal erkannt, schaltet die Steuereinrichtung 10 die Anschlussvorrichtung 4 in eine dritte Betriebsart, die Elemente der ersten und zweiten Betriebsart mischt und nachfolgend anhand einer weiteren Beispielkonfigurationen beschrieben ist.

Figur 4B zeigt eine vierte Computeranordnung 1d, bei der die Anschlussvorrichtung 4 in einer gemischten dritten Betriebsart betrieben wird. An die Anschlussvorrichtung 4 sind zwei Host-Computer 2a bzw. 2b mit jeweils einem Host-Adapter 3a bzw. 3b angeschlossen. Der Host-Adapter 3a arbeitet gemäß dem SAS-Standard, der Host-Adapter 3b gemäß dem SATA-Standard. Des Weiteren sind an die Anschlussvorrichtung 4 vier Festplattenlaufwerke 7a bis 7d über vier Geräteanschlüsse 6a bis 6d angeschlossen. Bei der ersten Festplatte 7a und der zweiten Festplatte 7b handelt es sich um SAS-Festplatten. Bei der dritten und vierten Festplatte 7c bzw. 7d handelt es sich um Festplatten gemäß dem SATA-Standard. Die dritte Festplatte 7c unterstützt einen so genannten Multi-Affiliation-Mode (MAM), der einen konkurrierenden Zugriff von Host-Adaptern 3a bzw. 3b gestattet. Die vierte Festplatte 7d ist hingegen nicht Multi-Affiliation-Mode-fähig. Die dritte Betriebsart gestattet die Verwendung unterschiedlicher Konfigurationen.

In einer als Mono-Mode-Routing bezeichneten Konfiguration der Anschlussvorrichtung 4 werden die SAS-Festplatten 7a und 7b ausschließlich dem SAS-Host-Adapter 3b und die SATA-Festplatten 7c und 7d ausschließlich dem SATA-Adapter 3b zugeordnet.

In einer als Multi-Mode-Routing bezeichneten Konfiguration werden die SATA-Festplatten 7c und 7d zusätzlich auch dem Host-Adapter 3a gemäß dem SAS-Datenübertragungsprotokoll zugeordnet, wobei die Zugriffe wie oben beschrieben nacheinander ausgeführt werden.

In einer als Multi-Affiliation-Mode-Routing bezeichneten und in der Figur 4B angedeuteten Konfiguration werden die Festplattenlaufwerke 7a und 7b gemäß dem SAS-Standard dem Host-Adapter 3a des Host-Computers 2a gemäß dem SAS-Standard zugeordnet. Die dritte Festplatte 7c wird sowohl dem ersten Host-Computer 2a als auch dem zweiten Host-Computer 2b zugeordnet und ist gleichzeitig für beide Host-Adapter 3a und 3b sichtbar. Die vierte Festplatte 7d gemäß dem SATA-Standard wird ausschließlich dem zweiten Host-Computer 2b gemäß dem SATA-Standard zugeordnet. Auf diese Weise ist ein besonders flexibler Zugriff der Host-Computer 2 auf die Festplattenlaufwerke 7a bis 7d möglich.

Schließlich ist in einem so genannten Selective-Mode-Routing eine manuelle Zuordnung von SAS- oder SATA-Laufwerken an vorbestimmte Host-Adapter möglich. Optional werden nicht explizit zugeordnete Peripheriegeräte gemäß dem ersten Datenübertragungsprotokoll Host-Adaptern gemäß dem ersten Datenübertragungsprotokoll und nicht zugeordnete Festplattenlaufwerke gemäß dem zweiten Datenübertragungsprotokoll Host-Adaptern gemäß dem zweiten Datenübertragungsprotokoll zugeordnet.

Die Konfiguration der Anschlussvorrichtung 4 erfolgt im Wesentlichen automatisch durch die Steuereinrichtung 10 unter Verwendung der von der Erkennungseinrichtung 8 ermittelten Hostanschluss-Verbindungsmatrix 12 bzw. Geräteanschluss-Verbindungsmatrix 13. Zusätzlich kann eine manuelle Konfiguration über die Konfigurationseinrichtung 11 vorgenommen werden. Dabei kann die Signalisierung von Einstellungen entweder in-band oder out-of-band über die Host-Computer 2 oder zusätzliche Steuercomputer erfolgen. Beispielsweise eignen sich hierfür das so genannte SAS-Managementprotokoll (SMP), spezielle Datenbusse wie beispielsweise I²C oder benutzerspezifische Befehle für die Anschlussvorrichtung 4. Ebenso können durch die Konfigurationseinrichtung 11 oder an der Anschlussvorrichtung 4 angeordnete Eingabeelemente die Betriebsart der Anschlussvorrichtung 4 in einer bestimmten Betriebsart erzwungen werden. Beispielsweise kann das Gerät durch Drücken einer entsprechenden Taste fest als SAS-Expander oder alternativ SATA-Port-Multiplier oder -Selector betrieben werden.

Bevorzugt findet die Konfiguration der Anschlussvorrichtung 4 jedoch über durch die Erkennungseinrichtungen 8a bzw. 8b ausgelöste Ereignisse statt. Insbesondere kann auch ein im Betrieb der Anschlussvorrichtung 4 erkanntes COMSAS-Signal dazu verwendet werden, um die Anschlussvorrichtung 4 in die erste oder dritte Betriebsart zu schalten, nachdem eine Link-Initialisierung mit einem Host-Adapter gemäß dem ersten Datenübertragungsprotokoll durchgeführt wurde. Umgekehrt kann die Anschlussvorrichtung 4 bei Erkennung eines Anschlusses eines Hostadapters, der kein COMSAS-Signal zur Verfügung stellt, in die zweite oder dritte Betriebsart geschaltet werden.

Die automatische Konfiguration der Anschlussvorrichtung 4 durch die Erkennungseinrichtungen 8 besitz den zusätzlichen Vorteil, dass die Anschlussvorrichtung 4 keine Batterie zur Speicherung von Konfigurationsdaten benötigt. Dies wiederum erhöht die Zuverlässigkeit und reduziert die Wartungskosten beim Betrieb der Anschlussvorrichtung 4.

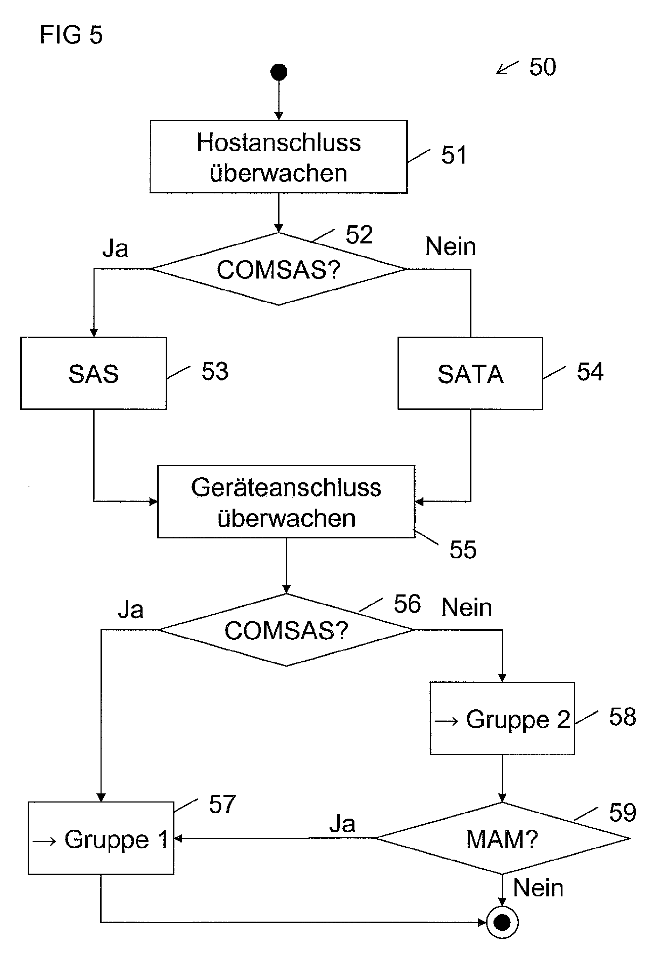

Figur 5 zeigt ein Ablaufdiagramm eines Betriebsverfahrens 50 zur automatischen Konfiguration und zum Betrieb der Anschlussvorrichtung 4.

In einem ersten Schritt 51 wird einer oder werden mehrere Host-Anschlüsse 5 überwacht. Wird in einem Schritt 52 ein vorbestimmtes Konfigurationssignal erkannt, im Ausführungsbeispiel ein Out-of-band COMSAS-Signal, wird die Anschlussvorrichtung 4 im Schritt 53 in eine erste Betriebsart geschaltet, beispielsweise als SAS-Expander. Wird kein COMSAS-Signal erkannt, wird die Anschlussvorrichtung 4 im Schritt 54 in eine zweite Betriebsart gemäß dem zweiten Datenübertragungsprotokoll geschaltet. Beispielsweise wird die Anschlussvorrichtung 4 als SATA-Port-Multiplier oder SATA-Port-Selector konfiguriert. Sofern die Anschlussvorrichtung 4 mehrere Host-Anschlüsse 5 aufweist, kann die Einstellung der ersten bzw. zweiten Betriebsart je Host-Anschluss 5 vorgenommen und in der Hostanschluss-Verbindungsmatrix 12 festgelegt werden, sodass sich, wie oben beschrieben, auch gemischte Betriebsarten für die Anschluss-Vorrichtung 4 ergeben können.

In einem weiteren Schritt 55 werden die Geräteanschlüsse 6 der Anschlussvorrichtung 4 überwacht. Werden in einem Schritt 56 das vorbestimmte Konfigurationssignal, also beispielsweise das COMSAS-Signal, an einem Geräteanschluss 6 erkannt, wird dieser Geräteanschluss 6 einer ersten Gruppe zugeordnet. Dies wird in Schritt 57 durchgeführt. Alternativ, d. h. wenn kein COMSAS-Signal in Schritt 56 erkannt wurde, wird ein an den zugehörigen Geräteanschluss 6 angeschlossenes Peripheriegerät in einem Schritt 58 einer zweiten Gruppe zugeordnet. Weist das angeschlossene Gerät jedoch geeignete Eigenschaften auf, um gleichzeitig auch von Host-Adaptern 3 gemäß dem ersten Datenübertragungsprotokoll angesprochen zu werden, ist es beispielsweise Multi-Association-Mode-fähig, wird es nach einer entsprechenden Überprüfung in Schritt 59 zusätzlich auch der ersten Gruppe in Schritt 57 zugeordnet.

Es wird darauf hingewiesen, dass in der Figur 5 lediglich die automatische Konfiguration der Host-Anschlüsse 5 und der Geräteanschlüsse 6 der Anschlussvorrichtung 4 dargestellt ist. Alternativ oder zusätzlich zu der automatischen Konfiguration ist selbstverständlich auch eine manuelle Zuordnung von Host-Anschlüssen 5 bzw. Geräteanschlüssen 6 zu einer ersten Gruppe oder zweiten Gruppe möglich, wie dies bereits oben beschrieben wurde.

Darüber hinaus kann die Erkennung von Konfigurationssignalen in einer anderen als der dargestellten Reihenfolge und insbesondere auch fortlaufend vorgenommen werden, so dass die Anschlussvorrichtung auch im Betrieb in eine andere Betriebsart geschaltet werden kann bzw. die Zuordnung von an sie angeschlossene Peripheriegeräte aktualisiert werden kann. Dies ist insbesondere bei der Verwendung von RAID-Systemen von Vorteil, die oftmals einen Austausch einzelner Komponenten im Betrieb ("hot swapping") gestatten.

Selbstverständlich können anstelle der Festplattenlaufwerke 7 auch andere Peripheriegeräte, beispielsweise Bandlaufwerke, an den Geräteanschlüssen 6 erkannt und die Geräteanschlüsse 6 entsprechend konfiguriert werden. Schließlich ist es möglich, einen Host-Computer 2 über eine Mehrzahl von Host-Adaptern 3 mit ein und derselben Anschlussvorrichtung 4 zu verbinden, um besonders leistungsfähige und/oder ausfallsichere Computeranordnungen zu schaffen.

Bezugszeichenliste
- 1: Computeranordnung
- 2: Host-Computer
- 3: Host-Adapter
- 4: Anschlussvorrichtung
- 5: Host-Anschluss
- 6: Geräteanschluss
- 7: Festplattenlaufwerk
- 8: Erkennungseinrichtung
- 9: Vermittlungseinrichtung
- 10: Steuereinrichtung
- 11: Konfigurationseinrichtung
- 12: Hostanschluss-Verbindungsmatrix
- 13: Geräteanschluss-Verbindungsmatrix

- 50: Arbeitsverfahren
- 51 bis 59: Verfahrensschritte

## Patentansprüche

1. Anschlussvorrichtung (4) zum Anschluss einer Mehrzahl von Peripheriegeräten (7) an wenigstens einen Host-Adapter (3), wobei jedes der Mehrzahl von Peripheriegeräten (7) sowie der Host-Adapter (3) ein erstes und/oder ein zweites Datenübertragungsprotokoll beherrscht, aufweisend
- wenigstens einen ersten Host-Anschluss (5) zum Anschluss an den wenigstens einen Host-Adapter (3),
- eine Mehrzahl von Geräteanschlüssen (6) zum Anschluss der Mehrzahl von Peripheriegeräten (7),
- wenigstens eine Vermittlungseinrichtung (9) zum wahlfreien Verbinden der Mehrzahl von Geräteanschlüssen (6) mit dem ersten Host-Anschluss (5),
- wenigstens eine Erkennungseinrichtung (8) zum Erkennen eines Bereitstellens eines vorbestimmten Konfigurationssignals gemäß dem ersten Datenübertragungsprotokoll an dem ersten Host-Anschluss (5) und
- wenigstens eine Steuereinrichtung (10) zum Auswählen einer Betriebsart der Anschlussvorrichtung (4), wobei die Steuereinrichtung (10) dazu eingerichtet ist, während einer Initialisierungsphase die Anschlussvorrichtung (4) bei Erkennen des vorbestimmten Konfigurationssignals an dem ersten Host-Anschluss (5) durch die Erkennungseinrichtung (8) in eine erste Betriebsart gemäß dem ersten Datenübertragungsprotokoll und bei Nichterkennung des vorbestimmten Konfigurationssignals in eine zweite Betriebsart gemäß dem zweiten Datenübertragungsprotokoll zu schalten.

2. Anschlussvorrichtung (4) nach Anspruch 1, **dadurch gekennzeichnet, dass** wenigstens eine Erkennungseinrichtung (8) zum Erkennen eines Bereitstellens des vorbestimmten Konfigurationssignals gemäß dem ersten Datenübertragungsprotokoll an der Mehrzahl von Geräteanschlüssen (6) eingerichtet ist und die Steuereinrichtung (10) dazu eingerichtet ist, eine erste Gruppe von Geräteanschlüssen (6) der Mehrzahl der Geräteanschlüsse (6) dem ersten Host-Anschluss (5) zuzuordnen, wobei die Zugehörigkeit eines Geräteanschlusses (6) zu der ersten Gruppe in Abhängigkeit einer Erkennung des vorbestimmten Konfigurationssignals an dem entsprechenden Geräteanschluss (6) durch die wenigstens eine Erkennungseinrichtung (8) bestimmt wird.

3. Anschlussvorrichtung (4) nach Anspruch 2, **dadurch gekennzeichnet, dass** die Steuereinrichtung (10) dazu eingerichtet ist, wenigstens die Geräteanschlüsse (6) der ersten Gruppe zuzuordnen, an denen das vorbestimmte Konfigurationssignal erkannt wurde, wenn in der Initialisierungsphase das vorbestimmte Konfigurationssignal an dem ersten Host-Anschluss (5) erkannt wurde.

4. Anschlussvorrichtung (4) nach Anspruch 2 oder 3, **dadurch gekennzeichnet, dass** die Steuereinrichtung (10) dazu eingerichtet ist, alle Geräteanschlüsse (6) der ersten Gruppe zuzuordnen, wenn in der Initialisierungsphase das vorbestimmte Konfigurationssignal an dem ersten Host-Anschluss (5) erkannt wurde.

5. Anschlussvorrichtung (4) nach einem der Ansprüche 2 bis 4, **dadurch gekennzeichnet, dass** die Steuereinrichtung (10) dazu eingerichtet ist, nur die Geräteanschlüsse (6) der ersten Gruppe zuzuordnen, an denen das vorbestimmte Konfigurationssignal nicht erkannt wurde, wenn in der Initialisierungsphase das vorbestimmte Konfigurationssignal an dem ersten Host-Anschluss ebenfalls nicht erkannt wurde.

6. Anschlussvorrichtung (4) nach einem der Ansprüche 2 bis 5, **gekennzeichnet durch** wenigstens einen zweiten Host-Anschluss (5), wobei die Steuereinrichtung (10) dazu eingerichtet ist, die Anschlussvorrichtung (4) bei Erkennung des vorbestimmten Konfigurationssignals an dem ersten Host-Anschluss (5) und bei Nichterkennen des vorbestimmten Konfigurationssignals an dem zweiten Host-Anschluss (5) in eine dritte Betriebsart zu schalten, in der wenigstens ein Geräteanschluss gemäß dem ersten Datenübertragungsprotokoll und wenigstens ein anderer Geräteanschluss (6) gemäß dem zweiten Datenübertragungsprotokoll angesteuert wird.

7. Anschlussvorrichtung (4) nach Anspruch 6, **dadurch gekennzeichnet, dass** die Steuereinrichtung (10) dazu eingerichtet ist, eine zweite Gruppe von Geräteanschlüssen (6) der Mehrzahl der Geräteanschlüsse (6) dem zweiten Host-Anschluss (5) zuzuordnen.

8. Anschlussvorrichtung (4) nach Anspruch 7, **dadurch gekennzeichnet, dass** die Steuereinrichtung (10) dazu eingerichtet ist, wenigstens die Geräteanschlüsse (6) der zweiten Gruppe zuzuordnen, die nicht bereits der ersten Gruppe zugeordnet wurden.

9. Anschlussvorrichtung (4) nach Anspruch 7, **dadurch gekennzeichnet, dass** die Steuereinrichtung (10) dazu eingerichtet ist, die Zugehörigkeit eines Geräteanschlusses (6) zu der zweiten Gruppe in Abhängigkeit einer Erkennung des vorbestimmten Konfigurationssignals an dem entsprechenden Geräteanschluss (6) durch die wenigstens eine Erkennungseinrichtung (8) zu bestimmen.

10. Anschlussvorrichtung (4) nach einem der Ansprüche 7 bis 9, **dadurch gekennzeichnet, dass** die Steuereinrichtung (10) dazu eingerichtet ist, eine vorbestimmte Geräteeigenschaft wenigstens der Peripheriegeräte (7) abzufragen, die an Geräteanschlüsse (6) angeschlossen sind, an denen das vorbestimmte Konfigurationssignal nicht erkannt wurde, und die Zuordnung dieser Peripheriegeräte (7) in Abhängigkeit der abgefragten Geräteeigenschaft zu bestimmen.

11. Anschlussvorrichtung (4) nach Anspruch 10, **dadurch gekennzeichnet, dass** die Geräteeigenschaft eine Mehrfachzuordnungsfähigkeit umfasst und die Steuereinrichtung (10) dazu eingerichtet ist, Peripheriegeräte (7) mit einer Mehrfachzuordnungsfähigkeit sowohl der ersten als auch der zweiten Gruppe zuzuordnen.

12. Anschlussvorrichtung (4) nach einem der Ansprüche 7 bis 11, **dadurch gekennzeichnet, dass** die Steuereinrichtung (10) dazu eingerichtet ist, die Geräteanschlüsse (6) auf Grundlage einer Zuordnungstabelle einer Konfigurationseinrichtung (11) der ersten und/oder zweiten Gruppe zuzuordnen.

13. Betriebsverfahren (50) für eine Anschlussvorrichtung (4) zum Anschließen einer Mehrzahl von Peripheriegeräten (7) an wenigstens eine Host-Adapter (3), umfassend:
- Überwachen eines ersten Host-Anschlusses (6) auf ein vorbestimmtes Konfigurationssignal des wenigstens einen Host-Adapters (3),
- Auswählen einer ersten Betriebsart der Anschlussvorrichtung (4), wenn das vorbestimmte Konfigurationssignal während einer Initialisierungsphase erkannt wurde, und einer zweiten Betriebsart, wenn das vorbestimmte Konfigurationssignal während der Initialisierungsphase nicht erkannt wurde,
- Überwachen einer Mehrzahl von Geräteanschlüssen (6) auf das vorbestimmte Konfigurationssignal der Mehrzahl von Peripheriegeräten (7) und
- Verbinden einer ersten Gruppe von Peripheriegeräten (7) der Mehrzahl von Peripheriegeräten (7) mit dem wenigstens einen Host-Adapter (3) in Abhängigkeit der Überwachung des ersten Host-Anschlusses (5) und/oder der Mehrzahl von Geräteanschlüssen (6) auf das vorbestimmte Konfigurationssignal

14. Betriebsverfahren (50) nach Anspruch 13, **gekennzeichnet durch** die zusätzlichen Schritte:
- Überwachen eines zweiten Host-Anschlusses (5) auf das vorbestimmte Konfigurationssignal wenigstens eines zweiten Host-Adapters (3),
- Auswählen einer dritten Betriebsart der Anschlussvorrichtung (4), wenn das vorbestimmte Konfigurationssignal während der Initialisierungsphase an dem ersten Host-Anschluss erkannt wurde und das vorbestimmte Konfigurationssignal während der Initialisierungsphase an dem zweiten Host-Anschluss (5) nicht erkannt wurde.

15. Betriebsverfahren (50) nach Anspruch 13 oder 14, **dadurch gekennzeichnet, dass** der wenigstens eine Host-Anschluss (5) und/oder die Mehrzahl der Geräteanschlüsse (6) während einer Datenübertragungsphase zur differenziellen Signalisierung verwendet werden und in der Initialisierungsphase zu einer nicht differenziellen Signalisierung verwendet werden.
